Europäisches Patentamt

European Patent Office

Office européen des brevets

(19)

(11) Veröffentlichungsnummer: **0 047 837**

A2

(12) ## EUROPÄISCHE PATENTANMELDUNG

(21) Anmeldenummer: 81105650.6

(22) Anmeldetag: 18.07.81

(51) Int. Cl.³: **B 65 G 23/24**

(30) Priorität: 12.09.80 DE 3034362

(43) Veröffentlichungstag der Anmeldung:
24.03.82 Patentblatt 82/12

(84) Benannte Vertragsstaaten:
DE FR GB IT

(71) Anmelder: ROBERT BOSCH GMBH
Postfach 50
D-7000 Stuttgart 1(DE)

(72) Erfinder: Drexel, Peter
Plieninger Strasse 33
D-7031 Steinenbronn(DE)

(72) Erfinder: Leisner, Ernst
Wettertalstrasse 4
D-7257 Ditzingen(DE)

(72) Erfinder: Rothfuss, Peter
J.-S.-Bach-Strasse 6/1
D-7257 Ditzingen(DE)

(54) **Bandantrieb für Gurtbandförderer.**

(57) Es wird ein Bandantrieb für Gurtbandförderer vorgeschlagen, der ein leichtes Auswechseln des Transportgurtes
ohne großen Montageaufwand ermöglicht. Hierzu ist der
Antrieb zwischen der Gurtantriebstrommel (10) und der
diesen antreibende weiteren Trommel oder Welle (13) als
formschlüssiger Zahnradantrieb ausgebildet.

EP 0 047 837 A2

Croydon Printing Company Ltd.

0047837

R. **6518**
Ot/Jä 13.8.1980

Robert Bosch GmbH, 7000 Stuttgart 1

<u>Bandantrieb für Gurtbandförderer</u>

Stand der Technik

Die Erfindung geht aus von einem Bandantrieb nach der Gattung des Hauptanspruchs. Der Fördergurt von Bandförderern wird durch Reibkräfte bewegt. Hierzu läuft der Gurt über eine oder mehrere Antriebstrommeln, die über drehzahlreduzierende Getriebe von Motoren angetrieben werden. Das von der Antriebstrommel ablaufende Gurttrum wird von einer Bandspanneinrichtung vorgespannt, die zwischen Gurt- und Trommeloberfläche eine Andruckkraft erzeugt, mit der die Reibkraftübertragung erfolgt.

Derartige bekannte Bandförderer haben den Nachteil, daß der aus Antriebstrommel, Antriebsmotor mit Getriebe sowie Bandspanneinrichtung aufgebaute Bandantrieb eine festzusammenmontierte Einheit darstellt.

Vorteile der Erfindung

Die erfindungsgemäße Vorrichtung mit den kennzeichnenden Merkmalen des Hauptanspruchs hat demgegenüber den Vorteil, daß ein Bandantrieb für Gurtbandförderer geschaffen wurde, der es erlaubt, das Transportband in flexiblen Montagesystemen unter erschwerten Einbaubedingungen (Zugänglichkeit nur von oben) zu verwenden. Bei derartigen

...

Systemen stellt sich häufig das Problem einer kurzfristigen Umrüstung von Montage- bzw. Transportstrecken,
die ohne großen Aufwand bewerkstelligt werden muß.
Dies ist vor allem dann notwendig, wenn ein Gurt infolge von Verschleiß, Bruch oder sonstigen Reparaturen
ausgewechselt werden muß. Mit der vorliegenden Erfindung
ist es sehr einfach möglich, den Transportgurt einschließlich der Gurtantriebstrommel und der gegenüberliegenden Umlenktrommel nach oben hin abzuheben, ohne
daß ein umfangreicher Montagevorgang erforderlich wäre.
Ein anders ausgebildeter Transportgurt läßt sich ebenso
einfach anstelle des alten Gurtes einsetzen, indem die
Gurtantriebstrommel mit dem umlaufenden Transportband
und die entsprechende Umlenkrolle in eine vorgesehene
Lagerung eingesetzt und mittels einfacher Mitteln arretiert wird.

Durch die in den Unteransprüchen aufgeführten Maßnahmen
ist eine vorteilhafte Weiterbildung und Verbesserung
der im Hauptanspruch angegebenen Vorrichtung möglich.
Besonders vorteilhaft ist die Ausbildung des Antriebs
zwischen Gurtantriebstrommel und umlaufendem Band als
Zahnriemenantrieb. In diesem Fall kann die zahnförmige
Ausbildung der Gurtantriebstrommel gleichzeitig als
Antriebsmittel für eine die Gurtantriebstrommel antreibende weitere Trommel oder Welle verwendet werden.
Bei Verwendung z. B. eines Doppelgurtbandes kann der
Antrieb des als Zahnriemen ausgebildeten Bandes einerseits und der dazwischen angeordnete Antrieb der Gurtantriebstrommel andererseits an der an beiden Stellen
gleich ausgebildeten Gurtantriebstrommel erfolgen.

Die Erfindung sieht weiterhin vor, daß der Antrieb der
Gurtantriebstrommel in Form eines Schneckengetriebes
ausgebildet ist. Die zwischen die Bänder des Doppelgurtbandes hineinragende Schnecke wirkt in diesem Fall
auf die als Schneckenrad ausgebildete Gurtantriebstrommel. Durch einfaches Abheben der Gurtantriebstrommel aus der seitlich der Trommel vorgesehenen Lagerung wird die formschlüssige Verbindung zwischen
Schnecke und Schneckenrad gelöst.

Zeichnung

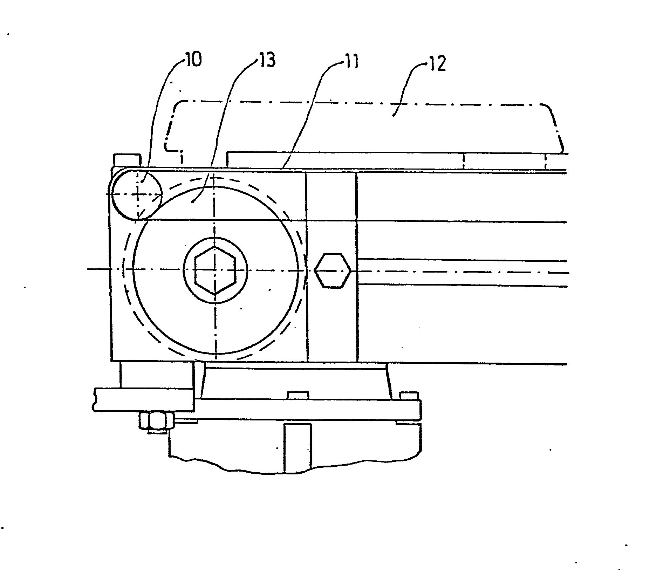

Ein Ausführungsbeispiel der Erfindung ist in der Zeichnung
dargestellt und in der nachfolgenden Beschreibung näher
erläutert.

Beschreibung der Erfindung

Der in der Figur dargestellte Bandantrieb besteht aus
der Gurtantriebstrommel 10 mit dem umlaufenden Transport-
oder Montageband 11, auf dem z. B. ein Werkstückträger
12 transportiert wird. Zur Übertragung von höheren
Kräften kann der Antrieb zwischen der Gurtantriebstrommel 10 und dem Transportband 11 als Zahnriemenantrieb ausgebildet sein.

Die Gurtantriebstrommel 10 wird von der ebenfalls zahnförmig ausgebildeten weiteren Antriebstrommel 13 abgetrieben. Hierfür kann die gleiche zahnförmige Ausbildung der Trommel 10, 13 wie beim Zahnriemenantrieb
zwischen Gurtantriebstrommel 10 und Transportband 11
vorgesehen werden.

Bei Ausbildung des Transportbandes als Doppelgurtband
kann der Antrieb der Gurtantriebstrommel 10 mittels der
Trommel 13 zwischen den Bändern 11 bzw. seitlich dieser
Bänder angeordnet sein. Dies ist erforderlich, um die
Gurtantriebstrommel 10 mitsamt dem Transportband 11
nach oben hin abheben zu können.

Bei Verwendung eines normalen Transportbandes kann der
Antrieb über die Trommel 13 seitlich des Transportbandes angeordnet werden.

Neben der Verwendung einer zahnförmig ausgebildeten
weiteren Trommel 13, die ihrerseits über ein Getriebe
mit Motor angetrieben wird, ist auch die Ausbildung
des Antriebs als Schneckengetriebe möglich. In diesem
Fall ist die Gurtantriebstrommel 10 als Schneckenrad
und anstelle der sie antreibenden weiteren Trommel 13
ist eine Schnecke vorgesehen. Die Schnecke kann in diesem
Fall bei einem Doppelgurtband ebenfalls zwischen den
Bändern formschlüssig auf das Schneckenrad 10, welches
mit der Gurtantriebstrommel übereinstimmt, einwirken.

Durch die Ausbildung des Antriebs zwischen Gurtantriebstrommel und Transportband als Zahnriemen kann
der Durchmesser der Gurtantriebstrommel klein gehalten werden, da hohe Kräfte durch den formschlüssigen Antrieb übertragen werden können. Hierdurch
kann die weitere Antriebstrommel 13 als Teil eines
Untersetzungsgetriebes wirken. Je nach geforderter
Geschwindigkeit und Kraftaufwand können die Abmaße
der Antriebstrommeln jedoch variiert werden.

Durch die erfindungsgemäße Konstruktion kann die
Gurtantriebstrommel 10 mitsamt dem Transportband 11 nach oben hin abgehoben werden. Dies wird dadurch erreicht, daß der Antrieb für die Gurtantriebstrommel 10 nicht fest mit dieser verbunden ist, sondern lediglich in der Betriebslage formschlüssig auf die Gurtantriebstrommel einwirkt. Die Gurtantriebstrommel 10 ist seitlich am Gehäuse z. B. mittels Kugellager gelagert, wobei die Lagerung durch einfache Arretierungsvorrichtungen, wie z. B. Schwenkhebel oder Schnappverschluß erfolgt.

R. 6 ɔ 1 8
Ot/Jä 13.8.1980

Robert Bosch GmbH, 7000 Stuttgart 1

Ansprüche

1. Bandantrieb für Gurtbandförderer mit einer durch einen Motor, ein Getriebe oder dergleichen angetriebenen Antriebstrommel für das umlaufende Gurtband, dadurch gekennzeichnet, daß die Gurtantriebstrommel (10) mit einer weiteren, diese antreibenden Trommel oder Welle (13) formschlüssig in Verbindung steht, wobei die Gurtantriebstrommel (10) und das umlaufende Gurtband (11) von der sie antreibenden Trommel oder Welle (13) weitgehend ohne Montageaufwand abtrennbar ist.

2. Bandantrieb nach Anspruch 1, dadurch gekennzeichnet, daß der Antrieb zwischen Gurtantriebstrommel (10) und Transport- bzw. Montageband (11) als Zahnriemenantrieb ausgebildet ist.

3. Bandantrieb nach Anspruch 1 oder 2, dadurch gekennzeichnet, daß das als Zahnriemen ausgebildete Band

...

- 2 -

(11) und/oder die die Gurtantriebstrommel antreibende
Trommel oder Welle (13) mit der Gurtantriebstrommel (10)
formschlüssig in Eingriff steht.

4. Bandantrieb nach einem oder mehreren der vorhergehenden Ansprüche, dadurch gekennzeichnet, daß die
Gurtantriebstrommel (10) und die diese antreibende
Welle (13) als Schneckengetriebe mit Schneckenrad
(10) und Schnecke ausgebildet sind.

5. Bandantrieb nach einem oder mehreren der vorhergehenden Ansprüche, dadurch gekennzeichnet, daß die
formschlüssige Lage zwischen Gurtantriebstrommel (10)
und Antrieb (13) mittels Schwenkhebel und/oder
Schnappverschlüsse oder dergleichen arretierbar ist.

0047837